# EUROPEAN PATENT APPLICATION

(11) **EP 4 039 360 A1**
(43) Date of publication of application: **10.08.2022**
(21) Application number: 20871505.2
(22) Date of filing: 23.09.2020
(51) Int. Cl.: B01F 17/42, C08F 290/06, C09D 5/02, C09J 11/06, C09D 201/00, C09J 201/00, C08F 2/24, C08L 71/00, C09D 7/63

(54) **SURFACTANT COMPOSITION, METHOD FOR PRODUCING RESIN AQUEOUS DISPERSION, PAINT, AND ADHESIVE**

(30) Priority: 30.09.2019 JP 2019179665
(71) Applicant: DKS Co. Ltd., Kyoto-shi, Kyoto 600-8873 (JP)
(72) Inventor: JOYABU Masatake, Kyoto-shi, Kyoto 600-8873 (JP); SHIOHARA Kei, Kyoto-shi, Kyoto 600-8873 (JP); OGASAWARA Asako, Kyoto-shi, Kyoto 600-8873 (JP); KIMURA Takuro, Kyoto-shi, Kyoto 600-8873 (JP); TAO CHI, Kyoto-shi, Kyoto 600-8873 (JP)
(74) Representative: TBK
(86) International application number: PCT/JP2020/035686
(87) International publication number: WO 2021/065593

(57) **Abstract**

Provided is a surfactant composition that can impart good polymerization stability, that can yield an aqueous resin dispersion having good wettability, and that can improve water resistance and water-resistant adhesive strength of a resin film formed from the aqueous resin dispersion. The surfactant composition according to the present invention includes a compound C1 represented by formula (1): 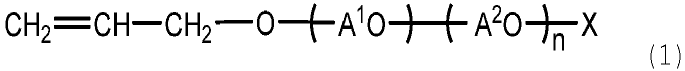 (in formula (1), A¹ represents an alkylene group having 10 to 14 carbon atoms, A² represents an alkylene group having 2 to 4 carbon atoms, n is an average number of moles of an oxyalkylene group A²O added and is a number of 1 to 100, and X represents a hydrogen atom, a sulfate ester or a salt thereof, a phosphate ester or a salt thereof, or methylcarboxylic acid or a salt thereof); and a compound C2 represented by formula (2): 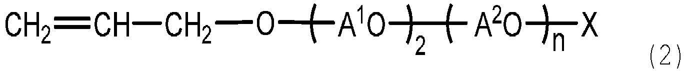 (in formula (2), A¹, A², n, and X are as defined in formula (1)). A molar ratio C1/C2 of the compound C1 to the compound C2 is 99/1 to 84/16.

## Description

### Technical Field

The present invention relates to a surfactant composition, a method for producing an aqueous resin dispersion, a paint, and an adhesive.

### Background Art

The so-called aqueous resin dispersions in which a resin is dispersed in an aqueous medium are widely used in the fields of, for example, various coating materials such as water-based paints, adhesives, glues, and binders for paper processing. Such aqueous resin dispersions are known to be produced by a method such as emulsion polymerization of a polymerizable compound in water. In this emulsion polymerization, an ionic surfactant or a nonionic surfactant is typically used.

There are two known types of surfactants: reactive (polymerizable) surfactants and nonreactive surfactants. For example, when a nonreactive surfactant is used in emulsion polymerization, good polymerization stability is maintained, but a resin film prepared by using the obtained aqueous resin dispersion tends to have poor water resistance. It is known that, in contrast, when a reactive surfactant is used in emulsion polymerization, water resistance tends to improve (refer to, for example, PTL 1 and PTL 2).

### Citation List

### Patent Literature

PTL 1: Japanese Unexamined Patent Application Publication No. 2013-245239
PTL 2: Japanese Unexamined Patent Application Publication No. 2014-237823

### Summary of Invention

### Technical Problem

As described above, the use of a reactive surfactant in emulsion polymerization can improve water resistance of a resin film but decreases wettability instead, resulting in a problem that when a resin film is formed on a hydrophobic surface (for example, a polypropylene plate), cissing is likely to occur during coating. In particular, from the viewpoint of enhancing copolymerizability with a polymerizable compound and dispersion stability, a hydrophobic group such as an aromatic ring is often introduced into a reactive surfactant. However, particularly in this case, wettability of the aqueous resin dispersion to a hydrophobic surface tends to decrease, and consequently, cissing is more likely to occur. There is also a problem that the use of a reactive surfactant in emulsion polymerization degrades water-resistant adhesive strength of a resin film.

For example, it is also conceivable that an aliphatic functional group such as a hydrocarbon group is introduced as the hydrophobic group; however, in this case, while wettability can be ensured, the water resistance and the water-resistant adhesive strength of a resin film are insufficient.

The present invention has been made in consideration of the above circumstances, and it is an object of the present invention to provide a surfactant composition that can impart good polymerization stability, that can yield an aqueous resin dispersion having good wettability, and that can improve the water resistance and the water-resistant adhesive strength of a resin film formed from the aqueous resin dispersion, and a method for producing an aqueous resin dispersion using the surfactant composition. It is also an object of the present invention to provide a paint and an adhesive that contain the aqueous resin dispersion. Solution to Problem

As a result of intensive studies to achieve the above objects, the inventors of the present invention have found that the objects can be achieved by using two compounds having specific structures in combination, thereby completing the present invention.

Specifically, the present invention includes, for example, subject matters described in items below.
Item 1 A surfactant composition including:
   a compound C1 represented by general formula (1) below: 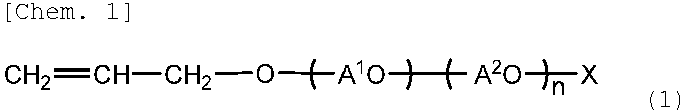 (where in formula (1), A¹ represents an alkylene group having 10 to 14 carbon atoms, A² represents an alkylene group having 2 to 4 carbon atoms, n is an average number of moles of an oxyalkylene group A²O added and is a number of 1 to 100, and X represents a hydrogen atom, a sulfate ester or a salt thereof, a phosphate ester or a salt thereof, or methylcarboxylic acid or a salt thereof); and
   a compound C2 represented by general formula (2) below: 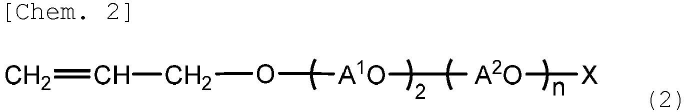 (where in formula (2), A¹, A², n, and X have the same meaning as A¹, A², n, and X, respectively, in formula (1) above),
   in which a molar ratio C1/C2 of the compound C1 to the compound C2 is 99/1 to 84/16.
Item 2 A method for producing an aqueous resin dispersion, the method including a step of performing a polymerization reaction of a polymerizable compound in the presence of the surfactant composition according to item 1.
Item 3 A paint including an aqueous resin dispersion produced by the method for producing an aqueous resin dispersion according to item 2.
Item 4 An adhesive including an aqueous resin dispersion produced by the method for producing an aqueous resin dispersion according to item 2.

### Advantageous Effects of Invention

The surfactant composition according to the present invention can impart good polymerization stability, can yield an aqueous resin dispersion having good wettability, and can improve water resistance and water-resistant adhesive strength of a resin film formed from the aqueous resin dispersion. Accordingly, the aqueous resin dispersion obtained by using the surfactant composition according to the present invention has good wettability, and the resin film formed from the aqueous resin dispersion has good water resistance and water-resistant adhesive strength. Description of Embodiments

Hereafter, embodiments of the present invention will be described in detail. The expressions "contain" and "include" as used herein encompass the concepts of "contain", "include", "consist essentially of", and "consist only of".

### 1. Surfactant composition

A surfactant composition according to the present invention includes a compound C1 represented by general formula (1) below and a compound C2 represented by general formula (2) below.

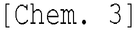

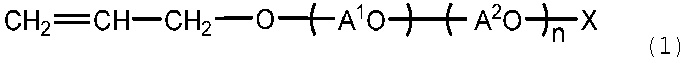

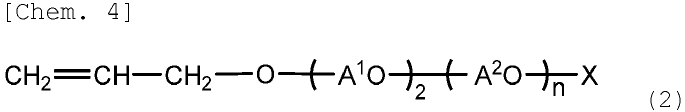

In formulae (1) and (2), A¹ represents an alkylene group having 10 to 14 carbon atoms, A² represents an alkylene group having 2 to 4 carbon atoms, and n is an average number of moles of an oxyalkylene group A²O added and is a number of 1 to 100. In formulae (1) and (2), X represents a hydrogen atom, a sulfate ester or a salt thereof, a phosphate ester or a salt thereof, or methylcarboxylic acid or a salt thereof.

In particular, in the surfactant composition according to the present invention, a molar ratio C1/C2 of the compound C1 to the compound C2 is 99/1 to 84/16. Hereinafter, the surfactant composition according to the present invention may be simply referred to as the "surfactant composition".

Since the surfactant composition according to the present invention has the configuration described above, the surfactant composition can be suitably used as a surfactant in, for example, emulsion polymerization and can impart good polymerization stability. In addition, an obtained aqueous resin dispersion has good wettability, and a resin film formed from the aqueous resin dispersion also has good water resistance and water-resistant adhesive strength. Accordingly, an aqueous resin dispersion obtained using the surfactant composition according to the present invention has good wettability, and a resin film formed from the aqueous resin dispersion has good water resistance and water-resistant adhesive strength.

The "wettability of an aqueous resin dispersion" as used herein represents wettability of an aqueous resin dispersion to a hydrophobic surface and specifically refers to wettability to a surface of a hydrophobic resin. For example, the hydrophobic resin is a polypropylene resin plate.

### (Compound C1)

As represented by formula (1), the compound C1 is a surfactant that has a polymerizable moiety (carbon-carbon double bond moiety) in the molecule and that has an oxyalkylene moiety (A¹O) having a long-chain alkylene and an oxyalkylene moiety (A²O) having a short-chain alkylene. The compound C1 has one oxyalkylene moiety (A¹O) and n oxyalkylene moieties (A²O) in the molecule. In the compound C1, the polymerizable moiety and the oxyalkylene moiety (A¹O) are bonded to each other through an ether bond.

In the compound C1, A¹ is an alkylene group having 10 to 14 carbon atoms. For example, as long as the number of carbon atoms is within this range, the surfactant composition may include a plurality of compounds C1 having groups A¹ with different numbers of carbon atoms. When the surfactant composition includes a plurality of compounds C1 having groups A¹ with different numbers of carbon atoms, it is sufficient that the average number of carbon atoms of groups A¹ of the compounds C1 is in the range of 10 to 14. For example, the surfactant composition may include a compound C1 having a group A¹ with 12 carbon atoms and a compound C1 having a group A¹ with 14 carbon atoms, although a limited interpretation is not desired. Of course, the surfactant composition may include only one compound C1.

In the compound C1, A² is preferably an alkylene group having 2 to 3 carbon atoms, and particularly preferably an alkylene group having 2 carbon atoms (that is, an ethylene group) from the viewpoint that polymerization stability during emulsion polymerization is easily improved.

In the compound C1, A² is an alkylene group having 2 to 4 carbon atoms. For example, as long as the number of carbon atoms is within this range, the surfactant composition may include a plurality of compounds C1 having groups A² with different numbers of carbon atoms. When the surfactant composition includes a plurality of compounds C1 having groups A² with different numbers of carbon atoms, it is sufficient that the average number of carbon atoms of groups A² of the compounds C1 is in the range of 2 to 4. Of course, the surfactant composition may include only one compound C1.

In the compound C1, n is preferably 2 to 80, more preferably 3 to 60, still more preferably 4 to 50, and particularly preferably 5 to 40.

In the compound C1, even when X is any group, the effects of the present invention are not impaired. In particular, X is preferably hydrogen in view of, for example, the ease of production and the ease of improving water resistance and water-resistant adhesive strength. When X is a salt, for example, the salt may be similar to those in publicly known surfactants, and examples thereof include alkali metal salts and ammonium salts.

The method for producing the compound C1 is not particularly limited, and, for example, production methods similar to those for producing publicly known reactive surfactants are widely applicable.

### (Compound C2)

As represented by formula (2), the compound C2 is a surfactant that has a polymerizable moiety (carbon-carbon double bond moiety) in the molecule and that has an oxyalkylene moiety (A¹O) having a long-chain alkylene and an oxyalkylene moiety (A²O) having a short-chain alkylene. The difference between the compound C1 and the compound C2 is the number of oxyalkylene moieties (A¹O). Specifically, the compound C1 has one oxyalkylene moiety (A¹O), whereas the compound C2 has two oxyalkylene moieties (A¹O).

In the compound C2, A¹ is an alkylene group having 10 to 14 carbon atoms. For example, as long as the number of carbon atoms is within this range, the surfactant composition may include a plurality of compounds C2 having groups A¹ with different numbers of carbon atoms. When the surfactant composition includes a plurality of compounds C2 having groups A¹ with different numbers of carbon atoms, it is sufficient that the average number of carbon atoms of groups A¹ of the compounds C2 is in the range of 10 to 14. For example, the surfactant composition may include a compound C2 having a group A¹ with 12 carbon atoms and a compound C2 having a group A¹ with 14 carbon atoms, although a limited interpretation is not desired. Of course, the surfactant composition may include only one compound C2.

In the compound C2, A² is an alkylene group having 2 to 4 carbon atoms. For example, as long as the number of carbon atoms is within this range, the surfactant composition may include a plurality of compounds C2 having groups A² with different numbers of carbon atoms. When the surfactant composition includes a plurality of compounds C2 having groups A² with different numbers of carbon atoms, it is sufficient that the average number of carbon atoms of groups A² of the compounds C2 is in the range of 2 to 4. Of course, the surfactant composition may include only one compound C2.

In the compound C2, A² is preferably an alkylene group having 2 to 3 carbon atoms, and particularly preferably an alkylene group having 2 carbon atoms (that is, an ethylene group) from the viewpoint that polymerization stability during emulsion polymerization is easily improved.

In the compound C2, n is preferably 2 to 80, more preferably 3 to 60, still more preferably 4 to 50, and particularly preferably 5 to 40.

In the compound C2, even when X is any group, the effects of the present invention are not impaired. In particular, X is preferably hydrogen in view of, for example, the ease of production and the ease of improving water resistance and water-resistant adhesive strength. When X is a salt, for example, the salt may be similar to that in publicly known surfactants, and examples thereof include alkali metal salts and ammonium salts.

The method for producing the compound C2 is not particularly limited, and, for example, production methods similar to those for producing publicly known reactive surfactants are widely applicable.

### (Surfactant composition)

A ratio of the compound C1 to the compound C2 contained in the surfactant composition is not particularly limited as long as the molar ratio C1/C2 of the compound C1 to the compound C2 is 99/1 to 84/16. If the molar ratio C1/C2 exceeds 99/1, a resin film formed from an aqueous resin dispersion obtained using the surfactant composition has poor water resistance and water-resistant adhesive strength. If the molar ratio C1/C2 is lower than 84/16, polymerization stability and water-resistant adhesive strength decrease, and it is difficult to obtain a desired aqueous resin dispersion.

In view of the ease of improving water resistance and water-resistant adhesive strength of the resin film, the upper limit of the molar ratio C1/C2 is preferably 98/2, more preferably 97/3, still more preferably 96/4, and particularly preferably 95/5. In view of the ease of improving polymerization stability and water resistance and water-resistant adhesive strength of the resin film, the lower limit of the molar ratio C1/C2 is preferably 86/14, more preferably 88/12, and particularly preferably 90/10.

The compound C1 and the compound C2 included in the surfactant composition may be compounds having the same structure except that the number of oxyalkylene moieties (A¹O) is different. That is, all of A¹, A², X, and n in the compound C1 may be the same as those in the compound C2 in the surfactant composition. Alternatively, some of or all of A¹, A², X, and n in the compound C1 may be different from those in the compound C2 in the surfactant composition. From the viewpoint that the preparation of the surfactant composition is facilitated, the compound C1 and the compound C2 included in the surfactant composition are preferably compounds having the same structure except that the number of oxyalkylene moieties (A¹O) is different.

The surfactant composition may include compounds (other compounds) other than the compound C1 and the compound C2. Examples of the other compounds include compounds having three or more oxyalkylene moieties (A¹O). The surfactant composition may include, as the other compounds, one compound or two or more compounds. In the case where the surfactant composition includes the other compounds, the content of the other compounds may be, for example, 5% by mass or less, preferably 1% by mass or less, more preferably 0.1% by mass or less, and particularly preferably 0.05% by mass or less relative to the total mass of the compound C1 and the compound C2.

The surfactant composition may include additives. Examples of the additives include various additives included in publicly known surfactants. Specific examples thereof include pH adjusters, light stabilizers, antioxidants, preservatives, pigments, colorants, fungicides, and lubricants. The surfactant composition may include one additive or two or more additives. When the surfactant composition includes additives, the content of the additives may be, for example, 5% by mass or less, preferably 1% by mass or less, more preferably 0.1% by mass or less, and particularly preferably 0.05% by mass or less relative to the total mass of the compound C1 and the compound C2.

The compound C1 included in the surfactant composition may be one compound or two or more compounds. The compound C2 included in the surfactant composition may be one compound or two or more compounds. For example, as described above, the surfactant composition may include a plurality of compounds C1 having groups A¹ with different numbers of carbon atoms, and similarly, may include a plurality of compounds C2 having groups A¹ with different numbers of carbon atoms. The surfactant composition may consist only of the compound C1 and the compound C2.

Since the surfactant composition includes the compound C1 and the compound C2 in a predetermined ratio, the surfactant composition can be suitably used as a surfactant in, for example, emulsion polymerization and can impart good polymerization stability. In addition, an obtained aqueous resin dispersion has good wettability, and a resin film formed from the aqueous resin dispersion also has good water resistance and water-resistant adhesive strength. Accordingly, the surfactant composition can be used for, for example, emulsifiers for emulsion polymerization, emulsifiers for suspension polymerization, resin modifiers, textile processing aids, various coating materials such as water-based paints, adhesives, glues, and binders for paper processing.

### (Method for preparing surfactant composition)

The method for preparing the surfactant composition is not particularly limited. For example, the surfactant composition can be prepared by mixing the compound C1, the compound C2, and additives added as necessary in a predetermined ratio. In particular, in the present invention, a production method in which the compound C1 and the compound C2 are obtained in a single reaction step can be employed as described below. Hereinafter, this production method will be referred to as a "production method P".

The production method P includes step 1 of obtaining a product A by a reaction between allyl alcohol and a first cyclic ether compound, and step 2 of subsequently obtaining a mixture of the compound C1 and the compound C2 by causing the product A obtained in step 1 to react with a second cyclic ether compound.

Step 1 is a step of obtaining a product A by a reaction between allyl alcohol and a first cyclic ether compound. In a way, this product A is a precursor of the compound C1 and the compound C2.

In step 1, examples of the first cyclic ether compound include α-olefin epoxides having 10 to 14 carbon atoms. These α-olefin epoxides may be used alone or in combination of two or more different α-olefin epoxides (for example, two or more α-olefin epoxides having different number of carbon atoms).

Regarding the use ratio of the first cyclic ether compound to allyl alcohol in the reaction of step 1, for example, the amount of the first cyclic ether compound used may be 0.55 to 0.95 moles relative to 1 mole of allyl alcohol. In this case, the ratio of the compound C1 and the compound C2 that are finally obtained by the production method P easily satisfies the aforementioned range of the molar ratio C1/C2, that is, 99/1 to 84/16. The amount of the first cyclic ether compound used is more preferably 0.6 to 0.9 moles, and particularly preferably 0.7 to 0.85 moles relative to 1 mole of allyl alcohol.

In step 1, the reaction between allyl alcohol and the first cyclic ether compound can be performed, for example, in the presence of a catalyst. The catalyst is not particularly limited, and, for example, publicly known catalysts used in a ring-opening reaction of a cyclic ether compound can be widely used. Specifically, for example, a tertiary amine, a quaternary ammonium salt, boron trifluoride or an ether complex salt thereof, aluminum chloride, barium oxide, sodium hydroxide, or potassium hydroxide can be used as the catalyst.

Reaction conditions in step 1 are also not particularly limited. For example, the reaction temperature may be room temperature (e.g., 15°C) to 150°C. The reaction time may be appropriately set depending on the conditions such as the reaction temperature and may be, for example, 30 minutes to 10 hours. The pressure during the reaction is also not particularly limited, and the reaction may be performed under the atmospheric pressure, increased pressure, or reduced pressure. For example, the reaction may be performed at a pressure of 0.01 to 1 MPa. The reaction may be performed under an atmosphere of an inert gas such as nitrogen.

In step 1, after completion of the reaction, for example, the removal of an unreacted product and washing may be performed by appropriate methods.

Through step 1 described above, an adduct of allyl alcohol and the first cyclic ether compound is obtained as the product A. In this product A, a compound in which one first cyclic ether compound molecule is added to one allyl alcohol molecule and a compound in which two first cyclic ether compound molecules are added to one allyl alcohol molecule are obtained. Furthermore, in some cases, a compound in which three or more first cyclic ether compound molecules are added to one allyl alcohol molecule is also mixed. The compound (monoadduct) in which one first cyclic ether compound molecule is added to one allyl alcohol molecule is considered to be the precursor of the compound C1, and the compound (diadduct) in which two first cyclic ether compound molecules are added to one allyl alcohol molecule is considered to be the precursor of the compound C2. The proportion of the monoadduct and the diadduct that are present in the product A can be quantitatively determined by, for example, gas chromatography.

Step 2 is a step of obtaining a mixture of the compound C1 and the compound C2 by causing the product A obtained in step 1 to react with a second cyclic ether compound.

In step 2, examples of the second cyclic ether compound include alkylene oxides having 2 to 4 carbon atoms, and specifically are ethylene oxide, propylene oxide, butylene oxide, and the like. One second cyclic ether compound may be used alone, or two or more different second cyclic ether compounds may be used in combination.

In step 2, the amount of the second cyclic ether compound used may be 1 to 100 moles and is preferably 2 to 80 moles, more preferably 3 to 60 moles, still more preferably 4 to 50 moles, and particularly preferably 5 to 40 moles relative to 1 mole of the product A obtained in step 1 (or allyl alcohol used).

In step 2, the reaction between the product A and the second cyclic ether compound can be performed, for example, in the presence of a catalyst. The catalyst is not particularly limited, and, for example, publicly known catalysts used in a ring-opening reaction of a cyclic ether compound can be widely used. Specifically, for example, a tertiary amine, a quaternary ammonium salt, boron trifluoride or an ether complex salt thereof, aluminum chloride, barium oxide, sodium hydroxide, or potassium hydroxide can be used as the catalyst.

Reaction conditions in step 2 are also not particularly limited. For example, the reaction temperature may be room temperature (e.g., 15°C) to 150°C. The reaction time may be appropriately set depending on the conditions such as the reaction temperature and may be, for example, 30 minutes to 10 hours. The pressure during the reaction is also not particularly limited, and the reaction may be performed under the atmospheric pressure, increased pressure, or reduced pressure. For example, the reaction may be performed at a pressure of 0.01 to 1 MPa. The reaction may be performed under an atmosphere of an inert gas such as nitrogen.

The reaction of step 2 produces a compound in which n moles of the second cyclic ether compound is added to the product A.

In the reaction of step 2, a product obtained by a reaction between the monoadduct produced in step 1 and the second cyclic ether compound is the compound C1, and a product obtained by a reaction between the diadduct produced in step 1 and the second cyclic ether compound is the compound C2.

In step 2, after completion of the reaction, for example, the removal of an unreacted product and washing may be performed by appropriate methods.

Through step 2 described above, a mixture of the compound C1 and the compound C2 is obtained. In this mixture, the molar ratio C1/C2 of the compound C1 to the compound C2 can be within the range of 99/1 to 84/16. The mixture itself obtained in step 2 can be used as a surfactant composition.

In the compound C1 and the compound C2 obtained in step 2, X in each of formulae (1) and (2) is a hydrogen atom. Accordingly, the hydrogen atom at the terminal may be substituted with a sulfate ester or a salt thereof, a phosphate ester or a salt thereof, or methylcarboxylic acid or a salt thereof, as necessary. The method for this substitution is not particularly limited and may be, for example, a method similar to a publicly known method.

The surfactant composition can be obtained by the production method P including step 1 and step 2 described above.

### 2. Method for producing aqueous resin dispersion

The surfactant composition can be used as, for example, a surfactant for emulsion polymerization of a polymerizable compound, and an aqueous resin dispersion can be thereby obtained. For example, the aqueous resin dispersion can be produced through a step of performing a polymerization reaction of a polymerizable compound in the presence of the surfactant composition.

The type of polymerizable compound used in emulsion polymerization is not particularly limited. Examples of the polymerizable compound include compounds having a carbon-carbon unsaturated bond. Examples of the compounds having a carbon-carbon unsaturated bond include **α,β** unsaturated carboxylic acids, **α,β** unsaturated carboxylic acid esters, **α,β** unsaturated amides, and unsaturated hydrocarbons.

Examples of the **α,β** unsaturated carboxylic acids include (meth)acrylic acid, acrylic acid dimer, crotonic acid, itaconic acid, and maleic acid. Herein, "(meth)acrylic" means "acrylic" or "methacrylic", "(meth)acrylate" means "acrylate" or "methacrylate", and "(meth)allyl" means "allyl" or "methallyl".

Examples of the **α,β** unsaturated carboxylic acid esters include (meth)acrylic acid monoalkyl esters such as methyl (meth)acrylate, ethyl (meth)acrylate, n-propyl (meth)acrylate, isopropyl (meth)acrylate, n-butyl meth(acrylate), isobutyl (meth)acrylate, n-hexyl (meth)acrylate, 2-ethylhexyl (meth)acrylate, and cyclohexyl (meth)acrylate; polyol poly(meth)acrylates such as ethylene glycol di(meth)acrylate, diethylene glycol di(meth)acrylate, and triethylene glycol di(meth)acrylate; (meth)acrylic acid fluoroalkyl esters such as trifluoroethyl (meth)acrylate; (meth)acrylic acid hydroxyalkyl esters such as 2-hydroxyethyl (meth)acrylate; epoxy group-containing (meth)acrylic acid esters such as glycidyl (meth)acrylate and allyl glycidyl ether; alkoxysilyl group-containing (meth)acrylic acid esters such as **γ-**(meth)acryloxyethyltrimethoxysilane, **γ-**(meth)acryloxyethyltriethoxysilane, and **γ-**(meth)acryloxypropyltrimethoxysilane; amino group-containing (meth)acrylic acid esters such as dimethylaminoethyl (meth)acrylate; alkoxy group-containing (meth)acrylic acid esters such as 2-methoxyethyl (meth)acrylate and butoxyethyl (meth)acrylate; and carbonyl group-containing (meth)acrylic acid esters such as 2-(acetoacetoxy)ethyl (meth)acrylate.

Examples of the **α,β** unsaturated amides include (meth)acrylamide, N-methylolacrylamide, and N-(Butoxymethyl) acrylamide.

Examples of the unsaturated hydrocarbons include styrene, **α**-methylstyrene, vinyltoluene, dimethylstyrene, tert-butylstyrene, and divinylbenzene.

In view of the ease of the proceeding of a polymerization reaction in emulsion polymerization and particularly good polymerization stability, the polymerizable compound preferably includes an **α-β** unsaturated carboxylic acid ester and more preferably includes a (meth)acrylic acid ester.

In emulsion polymerization, the polymerization compounds may be used alone or in combination of two or more thereof.

Emulsion polymerization can be performed in an aqueous solvent. Examples of the aqueous solvent include water, alcohols, and mixed solvents of water and alcohols. The type of water is not particularly limited, and examples thereof include various types of water such as distilled water, tap water, industrial water, ion-exchange water, deionized water, pure water, and electrolyzed water. Examples of the alcohols include a lower alcohol having 1 to 3 carbon atoms. From the viewpoint that emulsion polymerization proceeds more stably, the aqueous solvent is preferably water.

For example, the total mass of the compound C1 and the compound C2 is preferably 0.15 parts by mass or more, more preferably 0.5 parts by mass or more, and still more preferably 1 part by mass or more relative to 100 parts by mass of the polymerizable compound used in emulsion polymerization. The total mass of the compound C1 and the compound C2 is preferably 20 parts by mass or less, more preferably 15 parts by mass or less, and still more preferably 10 parts by mass or less relative to 100 parts by mass of the polymerizable compound used in emulsion polymerization. In this range, polymerization stability is good, an aqueous resin dispersion to be obtained has good wettability, and a resin film formed from the aqueous resin dispersion also has good water resistance and water-resistant adhesive strength.

The emulsion polymerization method is not particularly limited, and publicly known emulsion polymerization can be widely used. An example thereof is a method in which the polymerizable compound is added in the presence of the surfactant composition in water. In emulsion polymerization, the polymerizable compound may be added in the whole amount at once or may be divided into plural portions and separately added. Furthermore, the polymerizable compound can be added dropwise.

Another example of the emulsion polymerization method is a method in which a pre-emulsion prepared by emulsifying in advance the surfactant composition and the polymerizable compound in water and an aqueous solution including a polymerization initiator are mixed. When the pre-emulsion and the aqueous solution including a polymerization initiator are mixed, the aqueous solution may be mixed in the whole amount at once, at least one of these may be divided into plural portions and separately added, or at least one of these may be added dropwise. The method for preparing the pre-emulsion is not particularly limited, and an example thereof is a method including dissolving the surfactant composition in water, adding the polymerizable compound thereto, and stirring the resulting mixture. In the preparation of the pre-emulsion, an organic solvent miscible with water, such as methanol, can be used in combination.

In emulsion polymerization, the reaction temperature is not particularly limited, may be, for example, 50°C to 100°C, and is more preferably 60°C to 95°C. The reaction temperature may be kept constant from the start of the reaction or may be changed during the reaction. The reaction time in emulsion polymerization is not particularly limited, may be appropriately adjusted in accordance with the proceeding of the reaction, and is usually about two to nine hours.

In emulsion polymerization, a polymerization initiator, a protective colloid agent, a chain transfer agent, and a crosslinking agent may be used. The types of these are not particularly limited and may be the same as those that have been used in emulsion polymerization to date.

Examples of the polymerization initiator include persulfates such as ammonium persulfate and potassium persulfate; peroxides such as hydrogen peroxide and benzoyl peroxide; and redox polymerization initiators in which a persulfate and a reducing agent, such as an alkali metal sulfite or bisulfite, are combined.

The aqueous resin dispersion obtained as described above is produced using the surfactant composition according to the present invention and thus has good wettability, and a resin film formed from the aqueous resin dispersion also has good water resistance and water-resistant adhesive strength.

Accordingly, the aqueous resin dispersion is suitable for use in the fields of, for example, various coating materials, such as paints, adhesives, glues, and binders for paper processing. In particular, since the aqueous resin dispersion has good wettability and a resin film to be obtained also has good water resistance and water-resistant adhesive strength, the aqueous resin dispersion is particularly suitable for applications to a paint (e.g., a water-based paint) or an adhesive. The paint and adhesive that include the aqueous resin dispersion have good coatability because cissing to a hydrophobic surface or the like is unlikely to occur during coating, and a resin film to be formed also has good water resistance and water-resistant adhesive strength. The method for using the aqueous resin dispersion in a paint or adhesive application is not particularly limited and may be, for example, the same method of use as that for a publicly known paint or adhesive. The paint and adhesive can have the same configurations as those of publicly known paints and adhesives as long as they include the aqueous resin dispersion described above.

The method for forming a resin film from the aqueous resin dispersion is also not particularly limited and may be the same as a publicly known method for forming a resin film. The resin film can be formed on various substrates and can be suitably formed on a hydrophobic resin plate or the like because, in particular, the aqueous resin dispersion has good wettability to a hydrophobic surface. The hydrophobic resin plate may be, for example, a polypropylene plate or the like.

### EXAMPLES

Hereafter, the present invention will be described more specifically by way of Examples, but the present invention is not limited to aspects of these Examples.

### (Example 1-1)

### <α-Olefin epoxide adduct of allyl alcohol>

Into a reaction vessel equipped with a stirrer, a thermometer, a reflux tube, and a nitrogen inlet tube, 76 g (1.3 moles) of allyl alcohol and 8.4 g (0.15 moles) of potassium hydroxide were charged, and the temperature was maintained at 80°C in a nitrogen atmosphere. To the reaction vessel, 0.85 moles of an **α**-olefin epoxide (mixture of C12 and C14; average number of carbon atoms 13) was added dropwise, and a reaction was caused to proceed for 5 hours. Subsequently, the remaining allyl alcohol was distilled off under reduced pressure, and washing with water and drying were then performed to obtain an **α**-olefin epoxide adduct a-1 of allyl alcohol. As shown in Table 1 presented below, the **α**-olefin epoxide adduct a-1 was a mixture of a monoadduct (in which one **α**-olefin epoxide molecule was added) and a diadduct (in which two **α**-olefin epoxide molecules were added).

### <Surfactant composition>

The obtained **α**-olefin epoxide adduct a-1 of allyl alcohol was transferred to an autoclave, and 20 moles of ethylene oxide was caused to react with a-1 in the presence of a potassium hydroxide catalyst at a pressure of 1.5 kg/cm³ and a temperature of 130°C. Subsequently, purification was performed as appropriate to obtain a mixture of a compound C1 and a compound C2 in which 20 moles of ethylene oxide was added to a-1. This mixture was provided as a surfactant S-1.

### (Example 1-2)

An **α**-olefin epoxide adduct a-2 of allyl alcohol was obtained by the same method as that used in Example 1-1 except that the amount of **α**-olefin epoxide used was changed to 1 mole. Subsequently, a mixture of a compound C1 and a compound C2 in which 20 moles of ethylene oxide was added to the **α**-olefin epoxide adduct a-2 was obtained by the same method as that used in Example 1-1 except that the **α**-olefin epoxide adduct a-1 was changed to the **α**-olefin epoxide adduct a-2. This mixture was provided as a surfactant S-2.

### (Example 1-3)

An **α**-olefin epoxide adduct a-3 of allyl alcohol was obtained by the same method as that used in Example 1-1 except that the amount of **α**-olefin epoxide used was changed to 1.05 moles. Subsequently, a mixture of a compound C1 and a compound C2 in which 20 moles of ethylene oxide was added to the **α**-olefin epoxide adduct a-3 was obtained by the same method as that used in Example 1-1 except that the **α**-olefin epoxide adduct a-1 was changed to the **α**-olefin epoxide adduct a-3. This mixture was provided as a surfactant S-3.

### (Example 1-4)

An **α**-olefin epoxide adduct a-4 of allyl alcohol was obtained by the same method as that used in Example 1-1 except that the amount of **α**-olefin epoxide used was changed to 1.15 moles. Subsequently, a mixture of a compound C1 and a compound C2 in which 20 moles of ethylene oxide was added to the **α**-olefin epoxide adduct a-4 was obtained by the same method as that used in Example 1-1 except that the **α**-olefin epoxide adduct a-1 was changed to the **α**-olefin epoxide adduct a-4. This mixture was provided as a surfactant S-4.

### (Comparative Example 1-1)

An **α**-olefin epoxide adduct a-5 of allyl alcohol was obtained by the same method as that used in Example 1-1 except that the amount of **α**-olefin epoxide used was changed to 0.7 moles. Subsequently, a mixture of a compound C1 and a compound C2 in which 20 moles of ethylene oxide was added to the **α**-olefin epoxide adduct a-5 was obtained by the same method as that used in Example 1-1 except that the **α**-olefin epoxide adduct a-1 was changed to the **α**-olefin epoxide adduct a-5. This mixture was provided as a surfactant S-5.

### (Comparative Example 1-2)

An **α**-olefin epoxide adduct a-6 of allyl alcohol was obtained by the same method as that used in Example 1-1 except that the amount of **α**-olefin epoxide used was changed to 1.3 moles. Subsequently, a mixture of a compound C1 and a compound C2 in which 20 moles of ethylene oxide was added to the **α**-olefin epoxide adduct a-6 was obtained by the same method as that used in Example 1-1 except that the **α**-olefin epoxide adduct a-1 was changed to the **α**-olefin epoxide adduct a-6. This mixture was provided as a surfactant S-6.

**[Table 1]**

| Example/Comparative Example | Amount of α-olefin epoxide used (mole) | Monoadduct/Diadduct (molar ratio) |
|---|---|---|
| Example 1-1 | 0.85 | 99/1 |
| Example 1-2 | 1 | 95/5 |
| Example 1-3 | 1.05 | 92/8 |
| Example 1-4 | 1.15 | 84/16 |
| Comparative Example 1-1 | 0.7 | 100/0 |
| Comparative Example 1-2 | 1.3 | 81/19 |

Table 1 shows the results of the molar ratio of the monoadduct to the diadduct in the **α**-olefin epoxide obtained in each of Examples and Comparative Examples, the results being determined by gas chromatography. The measurement conditions for gas chromatography were as follows.
- Measurement apparatus: Agilent 7820A
- Column; Agilent DB-1
- Amount of injection: 1.0 µl (split ratio: 50:1)
- Injection port temperature: 300°C
- Temperature-rising conditions: An initial temperature of 40°C was held for 1 minute, the temperature was then increased to 80°C at a rate of 10°C/min and then increased to 300°C at a rate of 15°C/min.
- Carrier gas: helium (25 ml/min)
- Detector: flame ionization detector (FID)

Table 1 demonstrates that, in each of the surfactants S-1 to S-4 obtained in Examples 1-1 to 1-4, the molar ratio C1/C2 of the compound C1 to the compound C2 is in the range of 99/1 to 84/16.

### (Comparative Example 1-3)

Into an autoclave equipped with a stirrer, a thermometer, a nitrogen inlet tube, a raw material charging inlet tube, and an exhaust pipe for pressure reduction and including a temperature controller, 318 g (1.0 mole) of styrenated phenol (mono-compound/di-compound/tri-compound = 15/55/30 mass ratio) and 5.0 g of potassium hydroxide serving as a catalyst were charged. Subsequently, the atmosphere in the autoclave was replaced with nitrogen, the temperature was increased to 100°C under reduced pressure conditions, and a reaction was then caused to proceed at a pressure of 0.15 MPa and a temperature of 120°C while 66 g (1.5 moles) of ethylene oxide was sequentially introduced. Then, 171 g (1.5 moles) of allyl glycidyl ether was introduced into the autoclave at a temperature of 100°C and caused to react for five hours under continuous stirring. Subsequently, 880 g (20 moles) of ethylene oxide was sequentially introduced and caused to react at a pressure of 0.15 MPa and a temperature of 130°C to obtain a surfactant S-7.

### (Example 2-1)

A mixed monomer emulsion was prepared by blending 123.75 g of methyl methacrylate, 123.75 g of butyl acrylate, 2.5 g of acrylic acid, 15.0 g of the surfactant S-1, and 107 g of ion-exchange water and mixing the resulting mixture with a homomixer. Separately, in a reaction vessel equipped with a stirrer, a reflux condenser, a thermometer, a nitrogen inlet tube, and a dropping funnel, 128 g of ion-exchange water and 0.25 g of sodium hydrogen carbonate were mixed with each other. To the reaction vessel, 37 g of the mixed monomer emulsion was added, the temperature was increased to 80°C, and stirring was performed for 15 minutes. Subsequently, a mixture (aqueous solution) of 0.5 g of ammonium persulfate and 20 g of ion-exchange water was added thereto, mixing was performed for 15 minutes, and the remaining mixed monomer emulsion was then added dropwise thereto over a period of three hours. After mixing was further performed for two hours, cooling was performed, and the pH was adjusted to 8 with ammonia water to obtain an aqueous resin dispersion.

### (Example 2-2)

An aqueous resin dispersion was obtained by the same method as that used in Example 2-1 except that the surfactant S-1 was changed to the surfactant S-2.

### (Example 2-3)

An aqueous resin dispersion was obtained by the same method as that used in Example 2-1 except that the surfactant S-1 was changed to the surfactant S-3.

### (Example 2-4)

An aqueous resin dispersion was obtained by the same method as that used in Example 2-1 except that the surfactant S-1 was changed to the surfactant S-4.

### (Example 2-5)

An aqueous resin dispersion was obtained by the same method as that used in Example 2-2 except that methyl methacrylate was changed to 2-ethylhexyl acrylate.

### (Comparative Example 2-1)

An aqueous resin dispersion was obtained by the same method as that used in Example 2-1 except that the surfactant S-1 was changed to the surfactant S-5.

### (Comparative Example 2-2)

An aqueous resin dispersion was obtained by the same method as that used in Example 2-1 except that the surfactant S-1 was changed to the surfactant S-6.

### (Comparative Example 2-3)

An aqueous resin dispersion was obtained by the same method as that used in Example 2-1 except that the surfactant S-1 was changed to the surfactant S-7.

For each of the aqueous resin dispersions obtained in Examples and Comparative Examples, the following evaluations were conducted.

### (Polymerization stability)

The aqueous resin dispersion immediately after polymerization was passed through a polyester mesh (200 mesh) to filter out an aggregate generated during emulsion polymerization. The filter residue was washed with water and then dried at 105°C for two hours. The percent by mass of the filter residue relative to the solid content of the aqueous resin dispersion was determined from the mass of the dried filter residue, and evaluation was conducted on the basis of the following criteria. A: The amount of filter residue was less than 0.5% by mass, and polymerization stability was very good.

B: The amount of filter residue was 0.5% by mass or more and less than 1.0% by mass, and polymerization stability was good. C: The amount of filter residue was 1.0% by mass or more, and polymerization stability was poor.

### (Wettability)

A contact angle of the aqueous resin dispersion (10 µl) on a polypropylene plate (PP standard test plate, manufactured by Nippon Testpanel Co., Ltd.) after 60 seconds was measured with an automatic contact angle meter "DropMaster 500" (manufactured by Kyowa Interface Science Co., Ltd.).

### (Water resistance)

The aqueous resin dispersion was applied to a glass plate such that the film thickness became 120 µm after drying, dried at 60°C for 60 minutes, and then dried in an atmosphere at 20°C and 65% RH for 48 hours. The obtained resin film was immersed in pure water at 25°C, the glass plate was placed on a 16-point printed character, and the character was viewed through the resin film. The number of days taken for the character to become unreadable was examined, and evaluation was conducted on the basis of the following criteria.
A: The number of days was 15 or more, and water resistance was very good.
B: The number of days was 5 or more and less than 15, and water resistance was good.
C: The number of days was less than 5, and water resistance was poor.

However, only Example 2-5 was evaluated on the basis of the following criteria.
A: The time was 24 hours or longer, and water resistance was very good.
B: The time was 6 hours or longer and shorter than 24 hours, and water resistance was good.
C: The time was shorter than 6 hours, and water resistance was poor.

### (Water-resistant adhesive strength)

The aqueous resin dispersion was applied onto a polyethylene terephthalate film cut to a width of 25 mm so as to have a thickness of 52 µm, and dried in a circulating hot air dryer at 105°C for 20 minutes to prepare an adhesive sheet. This was attached to a stainless steel plate by moving a 2-kg roller back and forth twice, and the resulting test piece was immersed in water at 20°C for 24 hours. Subsequently, the test piece was taken from water and subjected to 180-degree peel test at a tensile speed of 30 mm/min and a measurement temperature of 20°C to measure an adhesive strength (N/25mm). The result was evaluated on the basis of the following criteria.
A: The adhesive strength was 5.0 N/25mm or more, and water-resistant adhesive strength was very good.
B: The adhesive strength was 1.0 N/25mm or more and less than 5.0 N/25mm, and water-resistant adhesive strength was good. C: The adhesive strength was less than 1.0 N/25mm, and water-resistant adhesive strength was poor.

**[Table 2]**

| Example/Comparative Example | Surfactant | C1/C2 | Polymerization stability | Contact angle | Water resistance | Water-resistant adhesive strength |
|---|---|---|---|---|---|---|
| Example 2-1 | S-1 | 99/1 | A | 35 | B | B |
| Example 2-2 | S-2 | 95/5 | A | 34 | A | A |
| Example 2-3 | S-3 | 92/8 | A | 38 | A | A |
| Example 2-4 | S-4 | 84/16 | B | 41 | A | A |
| Example 2-5 | S-2 | 95/5 | A | 49 | A | A |
| Comparative Example 2-1 | S-5 | 100/0 | A | 34 | C | C |
| Comparative Example 2-2 | S-6 | 81/19 | C | 41 | A | C |
| Comparative Example 2-3 | S-7 | - | A | 78 | A | C |

Referring to Table 2, each of the aqueous resin dispersions obtained in Examples had good polymerization stability and had a contact angle of 49° or less, showing that wettability was also good. Each of the resin films formed from the aqueous resin dispersions obtained in Examples had good water resistance and water-resistant adhesive strength. On the other hand, in Comparative Example 2-1, since the compound C2 was not included, sufficient polymerization of the resin was less likely to occur, and high water resistance was not achieved. In Comparative Example 2-2, presumably, since the amount of compound C2 was large, partial crosslinking occurred, which inhibited the formation of a uniform film, resulting in poor polymerization stability and water-resistant adhesive strength.

## Claims

1. A surfactant composition comprising:
a compound C1 represented by general formula (1) below: 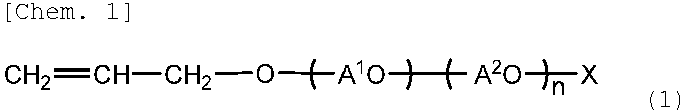 (where in formula (1), A¹ represents an alkylene group having 10 to 14 carbon atoms, A² represents an alkylene group having 2 to 4 carbon atoms, n is an average number of moles of an oxyalkylene group A²O added and is a number of 1 to 100, and X represents a hydrogen atom, a sulfate ester or a salt thereof, a phosphate ester or a salt thereof, or methylcarboxylic acid or a salt thereof); and
a compound C2 represented by general formula (2) below: 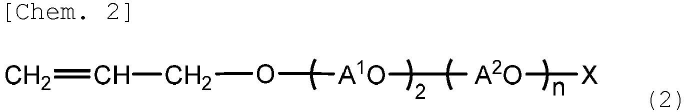 (where in formula (2), A¹, A², n, and X have the same meaning as A¹, A², n, and X, respectively, in formula (1) above),
wherein a molar ratio C1/C2 of the compound C1 to the compound C2 is 99/1 to 84/16.

2. A method for producing an aqueous resin dispersion, comprising a step of performing a polymerization reaction of a polymerizable compound in the presence of the surfactant composition according to Claim 1.

3. A paint comprising an aqueous resin dispersion produced by the method for producing an aqueous resin dispersion according to Claim 2.

4. An adhesive comprising an aqueous resin dispersion produced by the method for producing an aqueous resin dispersion according to Claim 2.
